(19) Europäisches Patentamt
European Patent Office
Office européen des brevets

(11) **EP 4 769 337 A1**

(12) **EUROPEAN PATENT APPLICATION**

(43) Date of publication:
01.07.2026 Bulletin 2026/27

(21) Application number: 25227794.2

(22) Date of filing: 30.12.2025

(51) International Patent Classification (IPC):
*G06V 20/40* (2022.01)    *G06V 40/20* (2022.01)

(52) Cooperative Patent Classification (CPC):
G06V 40/23; G06V 20/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.12.2024 US 202463740828 P

(71) Applicant: **Drive Hockey Analytics Inc**
**Coquitlam, BC V3B 6S2 (CA)**

(72) Inventors:
• **Akella, Krishant**
**Qoquitlam, V3B 6S2 (CA)**
• **Johnson, Ron**
**Qoquitlam, V3B 6S2 (CA)**
• **Dahlstedt, Mike**
**Qoquitlam, V3B 6S2 (CA)**

(74) Representative: **Münzer, Marc Eric**
**Aalborg Patent ApS**
**Algade 38, 3**
**9000 Aalborg (DK)**

(54) **SYSTEM AND METHOD OF TRACKING PLAYER IQ DURING A SPORTING EVENT**

(57) A system and method of tracking and classifying an athlete's game intelligence during a sporting event are disclosed, which includes identifying and ranking activities within the game, calculating performance differentials between pressure versus no-pressure situations and processing cognitive measurements based on the differentials. The system and method require the use of a sensor system including location and velocity tracking in combination with data processing and a database. The method allows for accurate discovery of an athlete's game IQ as performed in real-time during a live sporting event, as opposed to tested cognitive abilities in controlled or lab settings.

FIG. 9

EP 4 769 337 A1

## Description

**Technical Field**

The present invention relates to the use of a sensor system and data processing technique to quantify game intelligence, such as cognitive abilities involving pattern recognition and parallel processing, during play.

**Background**

The use of data in sports and the ability to process data into user friendly analytics has risen in popularity across all sports to make better evaluation, development, and tactical decisions, as well as for purposes such as to enhance fan experience through deeper insights and gaming. Regardless of the rise of analytics, sports teams still rely on qualified scouts to make observations and rate players using qualitative feedback for things such as technique; cognitive abilities such as pattern recognition and abilities to read and react to plays; and game intelligence aspects such as a player understanding of where they should be and what they should be doing in a variety of game circumstances.

The reason behind a reliance on biased, qualitative feedback is that data capture and analytics has been limited to physical attributes, such as location, speed, acceleration, and rate of event occurrences such as shots, passes, hits, etc. It is well known that when the physical attributes of a group of competing athletes are within a similar spectrum, it is the mental attributes that prevail. A major problem with using qualitative data to measure a player's 'IQ' is the feedback is biased to the individual's own experiences and what they managed to see and mentally process. There is also a huge cost in time and money for having multiple scouts requiring reviewing players and for people evaluating players to review the data. There is a need in sports for a system and method that can quantify a player's in-game cognitive abilities and intelligence as they relate to the game on a standardized scale.

Technologies and methods, such as found in US Patent Application US20190388728A1, or US 2016/0073961 can identify in some scenarios that an event has taken place, and potentially also recognize an athlete's ability to perform a technique, but they do not offer any assistance to measure the athlete's understanding of game strategy or tactics, ability to process the game mentally or react to a particular game situation.

Methods and devices, such as cited in AU2017203492A1 offer an ability to quantify perceptual-cognitive abilities, but it is not able to employ it in the context of a live sporting event. Furthermore, individuals may perform better in controlled environments than in the harsher environments within competitive sports arenas during games.

Having a standardized ability to measure and quantify an athlete's ability to process various scenarios within a game and perform at their best in variable pressure situations is needed to reduce evaluation and scouting bias, and as a precursor to training mental and cognitive abilities of an athlete in order to improve their performance.

**Summary**

The following presents a general summary of the invention to provide a basic understanding of some aspects of the invention and various example features of it. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a method of calculating athletic intelligence. The method also includes tracking locations of athletes within a sports area; computing speed and trajectory for each athlete, classifying that a sports situation associated with cognitive influence is occurring based on the locations and trajectories of the athletes within a region of interest, and calculating an athletic intelligence metric for a given athlete based on their speed and changes in their trajectory during the sports situation. Other embodiments of this aspect include corresponding computer systems, apparatus, and computer programs recorded on one or more computer storage devices, each configured to perform the actions of the methods.

Implementations may include one or more of the following features. The method where tracking may include video processing a video capturing the athletes to automatically identify each athlete and determine their location. Tracking may include sensors and transceivers worn by each athlete. Classifying uses an artificial intelligence model trained on sports situations that are labelled with degree of cognitive influence. The degree of cognitive influence increases with the speed and presence of one or more of: number of athletes; athletes that are opponents; number of obstacles; referees; and boundaries of the sports area. The region of interest is defined by a boundary surrounding one of the athletes carrying a sports projectile and dependent on the classified sports situation. The method may include tracking the locating of a sports projectile within the sports area, which location is used to a) classify sports situations, b) calculate athletic intelligence based on speed of the sports projectile. Calculating athletic intelligence based on the sports projectile successfully leaving the region of interest. The method may include a decision matrix storing values for the athletic intelligence metric for options, for each sports situation. Said speed used for calculating the athletic intelligence metric is tangential speed. Implementations of the described techniques may include hardware, a method or process, or computer software on a computer-accessible medium.

One general aspect includes a system for calculating athletic intelligence. The system includes a tracking system for tracking locations of athletes within a sports area; a computer processor programmed to: calculate speed and trajectory for each athlete, classify that a sports situation associated with cognitive influence is occurring based on the locations and trajectories of the athletes within a region of interest. The system also includes calculate an athletic intelligence metric for a given athlete based on their speed and changes in their trajectory during the sports situation. Other embodiments of this aspect include corresponding computer systems, apparatus, and computer programs recorded on one or more computer storage devices, each configured to perform the actions of the methods.

Implementations may include one or more of the following features. The system where the tracking system may include a video camera and the computer processor is further programmed to identify the athletes and determine their location from video from the video camera. The tracking system may include sensors and transceivers worn by each athlete. The system may include a datastore storing each athlete's location for a series of timestamps. The system may include a datastore an artificial intelligence model trained on sports situations that are labelled with degree of cognitive influence, which model classifies said sports situation. The region of interest is defined by a boundary surrounding one of the athletes carrying a sports projectile and dependent on the classified sports situation. The system may include tracking the locating of a sports projectile within the sports area, which location is used to a) classify sports situations, b) calculate athletic intelligence based on speed of the sports projectile. Calculating athletic intelligence based on the sports projectile successfully leaving the region of interest. The system may include a decision matrix storing values for the athletic intelligence metric for options, for each sports situation. Implementations of the described techniques may include hardware, a method or process, or computer software on a computer-accessible medium.

**Brief description of the drawings**

Systems, devices, and methods are described in greater detail herein with reference to the following figures in which:

FIG. 1 illustrates a block diagram of the system components in accordance with some embodiments of the invention;

FIG. 2 illustrates a block diagram of the local system of FIG. 1;

FIG. 3 illustrates a block diagram of the cloud computing system of FIG. 1;

FIG. 4 illustrates a block diagram of the central remote system of FIG. 1;

FIG. 5 illustrates a flow diagram of a method of evaluating player IQ in accordance with some embodiments of the invention;

FIG. 6 illustrates a block diagram of a neural network in accordance with some embodiments of the invention;

FIG. 7 illustrates a block diagram of a machine learning system in accordance with some embodiments of the invention;

FIG. 8 illustrates an architecture of a logistic regression model in accordance with some embodiments of the invention;

FIG. 9 illustrates a segment of a trajectory of a player in accordance with some embodiments of the invention;

FIG. 10 illustrate a visual representation of relative player positions overlaid on a region of interest within a partial playing area;

FIG. 11 illustrate a visual representation of relative player positions overlaid on a region of interest within a partial playing area;

FIG. 12 illustrates plot of number of obstructions vs. average tangential speed of three different players in accordance with some embodiments of the invention;

The above-mentioned drawings illustrate exemplary embodiments of the disclosed methods and systems in which like reference numerals refer to the same parts throughout the different drawings. Components in the drawings are not necessarily to scale, as emphasis is placed on clearly illustrating the principles of the inventions. Some drawings may use block or schematic diagrams and thus represent without showing details such as internal circuitry of components. Also, the embodiments shown in the figures are not to be construed as limiting the inventions but only as illustrative examples of a method and system according to the inventions that are illustrated herein to highlight the advantages of the inventions.

## Detailed Description

The invention will now be described in detail with reference to the accompanying drawings. Provided are systems and methods to measure a player's game intelligence through the activities performed based on the pressure level encountered, and their cognitive ability to react to the level of pressure and perform the activity. Using measured intelligence provides a working standard based on data rather than relying on human interpretation, which is time consuming, qualitative, and biased towards the person's disposition and experiences.

In the following description, associated drawings, included claims, and other parts of the document, various details are set forth to provide a detailed understanding of the disclosure and embodiments thereof. It will be apparent, however, that the disclosed embodiments may be practiced without some of these details. Several features described hereafter can each be used independently of one another or in combination of other features.

Although the system can be used to simultaneously track and process data in almost any real time sporting event, such as (car, bike) racing, (figure, speed) skating, (alpine, cross-country, water) skiing, (ball, ice, & field) hockey, lacrosse, basketball, it will be described in this section with regard to one exemplary embodiment for the sport of Ice hockey. Many of the situations and respective intelligence in such sports relates to quick movement of a ball or puck (more generally 'sports projectile'). The sports projectile itself if preferable tracked and a region of interest around the projectile depends on a given situation. For example, as the tracked ball moves closer towards a goal, the region of interest tightens, eventually becoming just a few meters between the ball and goal.

Embodiments of the present invention include a location tracking system utilizing positioning sensors on players and/or equipment during a live sporting event. A network of rink antennas captures the sensor data and transfers the data to a computing device that processes the data using mathematical algorithms and sports-physics models and outputs trajectory data of the players at any given time period. A data processing system that classifies trajectory data into instances have high or low cognitive influences and a variety of event situations. The performance of instances in particular event situations can be used to determine cognitive abilities of each player during a tracked event or over a series of events. The data can also be compared against other players and teams as a whole which can be used to gain insight on the athlete's game intelligence and areas for improvement, and improvements can be tracked over time as game pattern recognition increases or with focused cognitive training.

In some embodiments, the location tracking system utilizes video cameras combined with annotation or machine learning algorithms to determine positioning, while other embodiments utilize a combination of both. In some other embodiments, additional data such as stick data as described in U.S Patent No. 11,998,803B2, puck position data collected from for example a trackable puck, etc. can also be used. The result being a data table of objects that includes location, speed and/or velocity and acceleration relative to the playing field over time.

In accordance with the present disclosure, the term "timestamp" is described as an instance of time. For example, a timestamp may include the instance of time each data point is recorded or measured. As used herein, the terms "timestamp", "time instance", "instance of time" and the like refer to the same interpretation and may be interchangeably used throughout the specification. In accordance with the present disclosure, the term "timestep" is described as a period of time. For example, a timestep may include a duration of time when a certain activity (e.g. passing, shooting, skating with puck) or a game scenario occurred. As used herein, the terms "timestep", "time interval", "time period" and the like refer to the same interpretation and may be interchangeably used throughout the specification.

In accordance with the present disclosure, the term "region" or "region of interest" is described as a subset within a larger playing area. Each region may be similar in dimensions or different. A region may have a specific radius thus taking the shape of a circle. The radius may be adjusted such that there are a higher or lower number of players within the region of interest.

As used herein, the terms "region", "zone", "region of interest", "circle of interest" and the like refer to the same interpretation and may be interchangeably used throughout the specification.

In accordance with the present disclosure, the term "player IQ" is described as a player's intelligence and decision-making skills during gameplay. In some embodiments, player IQ can include maintaining a steady tangential speed despite obstructions, understanding game rules and strategies, anticipating opponents' moves, adjusting tactics based on the situation, effectively communicating with teammates, and creatively solving problems during play. A high player IQ signifies the ability to think critically, make smart decisions, and react effectively in real-time situations, contributing to overall success in competitive activities.

As used herein, the terms "player IQ", "cognitive ability", "cognitive skill", "cognitive function", "game intelligence", "skill intelligence" and the like refer to the same interpretation and may be interchangeably used throughout the specification.

For purposes of the present disclosure, agility skating with a puck and the top speed associated is considered a performance metric. The terms "tangential speed" refers to how quickly a player travels on a playing surface (*e.g.* ice) in a curved trajectory (*i.e.*, non-linear path). It can be measured in meters per second or kilometers per hour and depends on factors such as the player's skating angle, stance, balance, and force applied during movement. Players can use rapid angular movement to shift direction fast.

When a player needs to make rapid direction changes while in motion, it is typically due to reactions to game circumstances and therefore requires higher cognitive processing than simply skating in a straight line. Likewise, skating with tangential speed with a puck will require even higher cognitive processing. Therefore, agility skating with a puck and the top tangential speed able to be reached can be considered as an indicator of an activity that requires a large amount of cognitive ability in order to physically perform. Performing a skill such as tangential skating with a puck requires high cognitive processing abilities as compared to coasting in a straight line without a puck. Player cognitive ability scores can be compared and benchmarked against each other, and improvements tracked over time.

For purposes of the present disclosure, the term "skating angle" refers to the angle of movement of a player travelling in a curved trajectory. The rapid directional change of for example a hockey player can result in a series a skating angles during a given time period. A negligible skating angle (*e.g.* -5 degrees to 5 degrees) indicates that the player was travelling linearly and a large skating angle (e.g. beyond the range of -5 degrees to 5 degrees) indicates that the player travelled in a non-linear/curved path.

A machine learning model, as described herein, refers to a computational construct comprising a set of algorithmically defined parameters and structures configured to process input data and generate predictive or classificatory outputs. The model may include one or more layers of interconnected nodes or units, each performing mathematical transformations on received data based on learned weights or coefficients. These weights are iteratively optimized during a training phase using a dataset representative of the target domain, thereby enabling the model to generalize from observed patterns and infer outcomes for previously unseen inputs.

Machine learning models may include a variety of algorithmic constructs configured to learn from data and perform predictive or classificatory tasks. Such models may include, multinomial logistic regression models, linear regression models, decision trees, support vector machines, and multilayer neural networks; unsupervised learning models such as k-means clustering, principal component analysis, and autoencoders; as well as reinforcement learning frameworks. In some embodiments, the model may be implemented using deep learning techniques as well as hybrid models, ensemble methods, and any computational structure capable of optimizing performance metrics through iterative learning from structured or unstructured datasets.

In accordance with the present disclosure, the term "neural network" is described as a computational model inspired by the structure and functioning of the human brain, designed to recognize patterns and make predictions or decisions based on data. It consists of layers of interconnected units called neurons, with each neuron receiving inputs, processing them using weights, biases, and an activation function, and passing the output to the next layer. A typical neural network includes an input layer where data is fed into the network, at least one hidden layer where processing occurs and an output layer where the final predictions are made. During training, the network learns by adjusting its weights and biases based on the errors in its predictions along with an optimization algorithm.

In accordance with the present disclosure, the term "multinomial logistic regression model" is described as a statistical classification framework designed to assign input data to one of multiple discrete outcome categories based on a set of predictor variables. The model functions by calculating a series of log-odds (*i.e.*, logarithm of the odds of an activity occurring) for each non-reference category, where each log-odds value is computed as a linear combination of the input features weighted by optimized coefficients. These coefficients are determined during a training process, via, for example, maximum likelihood estimation, allowing the model to learn patterns and relationships within the data for accurate multi-class classification.

In accordance with the present disclosure, the term "convergence" in a machine learning model refers to the process by which the training algorithm minimizes the loss/error, reaching a point where further updates to the machine learning model's parameters produce little to no improvement in performance. This occurs as the optimization algorithm iteratively adjusts the model's weights and biases based on gradients computed from a loss function, progressively reducing the error between predictions and true labels. A model is considered converged when the loss stabilizes, or the improvement becomes negligible over successive iterations (or epochs).

As used herein, the terms "machine learning model", "machine learning", and like refer to the same interpretation and may be interchangeably used throughout the specification.

In accordance with the present disclosure, the term "machine learning system" refers to an integrated computational architecture configured to ingest input data, process the data through one or more machine learning models or algorithmic frameworks, and generate output predictions, classifications, or decisions based on learned representations. The system may include components for data acquisition, preprocessing, model training, inference execution, and performance monitoring, and may operate in real-time or batch modes. In some embodiments, the system incorporates multiple machine learning models that may operate independently or collaboratively, and can support deployment across distributed computing environments.

As used herein, the terms "machine learning system", "artificial intelligence system", and like refer to the same interpretation and may be interchangeably used throughout the specification.

In accordance with the present disclosure, the term "pressure" refers to a quantifiable or inferable measure characterized by the proximity, velocity, and/or trajectory of one or more opposing players relative to a certain player, such that the player's decision-making, movement/activities, or puck-handling options are constrained or influenced. Certain conditions during the game can also result in low-to-high pressure situations. For example, time left in the game, situation, proximity to blue line, winning/losing status, number of players, player's time left on ice, obstructions such as net and boards.

In accordance with the present disclosure, the term "player" refers to an athlete participating in a sport such as ice hockey. Therefore, as used herein, the terms "player", "athlete", and like refer to the same interpretation and may be interchangeably used throughout the specification.

The present invention can measure a player's game intelligence by their ability to recognize patterns and parallel process in high pressure game situations versus low pressure by replaying game situations highlighting ranked events available to the player. In embodiments of the invention, players could view from different angles including a top-down birds eye view or the view from their own perspective during play. The system can measure and classify events based on pressure versus no pressure and their top tangential speed at each event, shot accuracy, pass accuracy, etc. highlighting areas for improvement, and tracking their development progress over time.

Further to measuring performance levels of each activity, and classifying activities based on pressure versus no pressure situations, embodiments of the system are also able to measure how quick a player was able to read a play and react to the situation, including their ability to act with foresight or hindsight to action an opportunity. This is important to help provide a means to evaluate each activity to help correct behavior, and track progress over time. The result is an athlete that is more effective during play.

The present disclosure is not only able to identify players' game intelligence in context of team play, but is also able to identify and analyze a player's 'skill intelligence' ability, which is the ability to perform in the context of a single player situation and how effectively they are able to use specific skills. Examples of this would be their ability to protect a puck or ball while under pressure, or how a defender is able to handle a two-on-one or one-on-one play. When a single player is repeatedly able to have a high average/ top tangential speed and more successful outcomes in the same situation as other similarly skilled players, they are typically those who have greater ability to utilize their skills, hence skill intelligence. An ability to measure skill intelligence provides individual players and trainers a framework to train to improve their performance.

A cognitive influence could generally be defined by 'obstructions' - skiing poles, net, opponents, boards expressed as obstruction/area. Qualitative features of a cognitive influence may be expressed by: number of opponents; proximal distance to player; mean and maximum tangential speed of all events; shooting accuracy; passing accuracy; time spent in proximal situations; and offense versus defense situations.

Embodiments may comprise training data that are pre-processed in a cloud computing environment, where datasets are uploaded to secure cloud storage, analyzed using distributed computational frameworks, and processed results are stored or streamed to a central computing device which can, in some embodiments, use at least one machine learning model to train the data. In some embodiments, the central computing device is equipped with sufficient computational power, including a Graphical Processing Unit (GPU) and parallel processing, to efficiently train machine learning models on the provided dataset. Other embodiments can utilize a cloud computing environment or a local computer to process the machine learning model to train the data, provided that the computer processor(s) have sufficient memory capacity and a GPU to process large amounts of data.

The training data can be collected from previously tracked events. For example, the training data can include labeled datasets consisting of player status metrics, *e.g.* positioning, velocity, acceleration, proximity to opponents and teammates, and status event situations *e.g.* skating, passing, shooting, dump in. In some embodiments, the training data can include publicly available datasets. In some other embodiments, the training data can include a combination of data acquired through previously tracked events and other available datasets. A person of skill in the art will appreciate that training a machine learning model is a stochastic, iterative process which repeatedly performs forward and backward data manipulation, refining its parameters step-by-step, until it learns to model the underlying patterns in the data effectively.

In general, the present invention provides a novel system and method of evaluating an athlete's cognitive ability based on the cognitive influences and the variety of event situations where each instance (a.k.a. timestamp) can have a low to high cognitive influence. Using data removes bias from observations and provides a standardized method to measure, evaluate, benchmark and train athletes' cognitive abilities with reduced bias and human intervention.

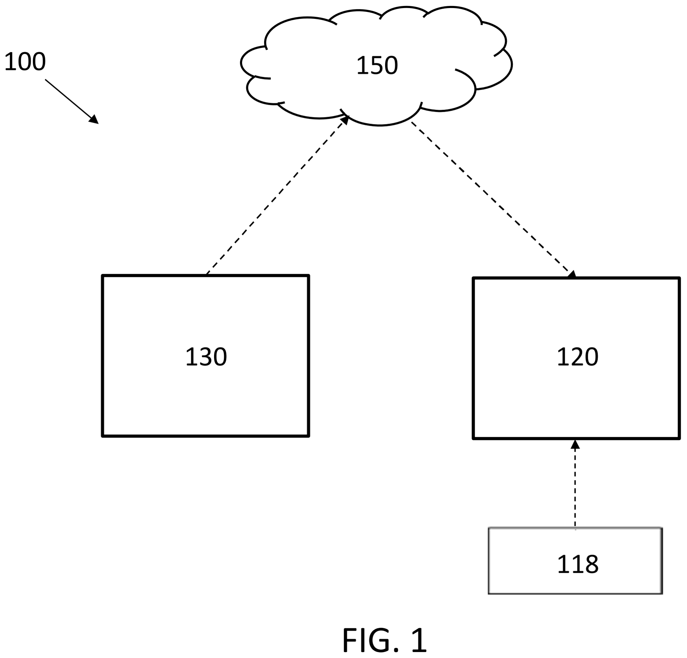

FIG. 1 shows a block diagram of the entire system **100** embodying the disclosure. A central remote system **120** is used to collect and process training data from a cloud computing system **150**. In some embodiments, additional training data **118** can also be utilized by the central remote system **120**. The additional training data may be sourced from previous game data, publicly available data, video data, annotator data and so on. Local system **130** streams raw player position data, rink coordinates, etc. to cloud computing system **150** which may process the raw data using mathematical models such as a Kalman filter or a variation thereof.

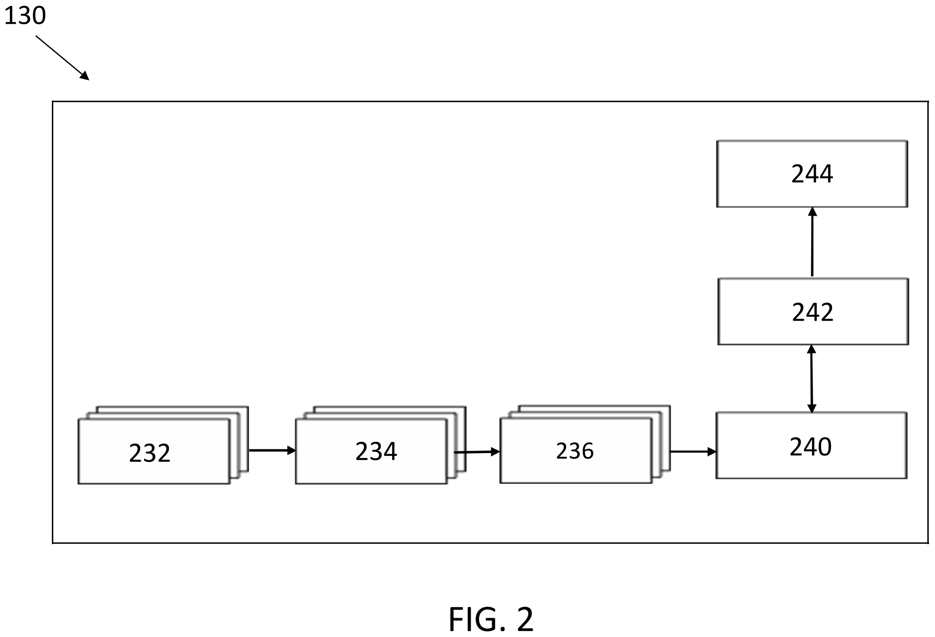

As shown in FIG. 2, local system **130** comprises edge computing device **240** which receives raw data including player positions, time, rink coordinates, player attributes, etc. which are stored in local database **242**. In some preferred embodiments, a plurality of player sensor tags **232** in use during a live sporting event communicates with wireless data transceivers **234** which are used to determine player location using multilateration which can include any standard multilateration technique, including two-way ranging, time difference of arrival, signal strength-based multilateration, phase difference of arrival or angle of arrival to name a few. Gateway devices **236** receives the location data of each player sensor tag **232** and transmits the data to edge computing device **240**. The data collected by the local edge computing device **240** is stored in a local database **242** along with a timestamp corresponding to the time the data is received.

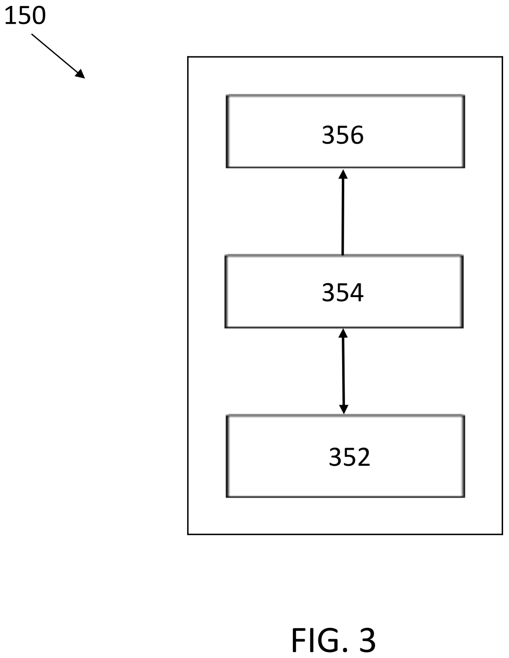

Following the tracked event, the data collected by the local edge computing device **240** is streamed to the cloud computing device **352** of FIG. 3 using an ethernet or a wireless communication network such as Wi-Fi® for processing.

In some embodiments, each player sensor tag **232** stores location data with timestamps. The data is offloaded to cloud computing system **150** of FIG. 1 and FIG. 3 after the tracked event for further processing, thereby minimizing data loss. However, such embodiments would require a player sensor with higher power consumption, more memory capacity and a microcontroller equipped with a clock to produce the timestamps. In some embodiments, the data is streamed directly to a cloud computing system **150** without saving in the local database **242**. Some embodiments of the local system **130** of FIG. 2 utilize a local user interface **244** to access local data or to configure aspects of the local system **130** such as identifying the location of wireless data transceivers **234**.

In some embodiments, the raw data is standardized by edge computing device **240** to remove anomalies and smooth out the data prior to uploading the data to cloud computing system **150**. As shown in FIG. 3, in some other embodiments, raw data is uploaded to the cloud computing device **352** of cloud computing system **150** which then processes the data to create a refined and standardized set of data. The refined set of data can be stored in database **354** which may be accessed by user interface **356** via for example a web application or an Application Programming Interface (API). User interface **356** can be, for example, a Graphical User Interface (GUI). In some preferred embodiments, the refined and standardized set of data gets pre-processed by the cloud computing system **150** to create a training dataset. In some embodiments, each of local database **242** and database **354** may be a plurality of databases.

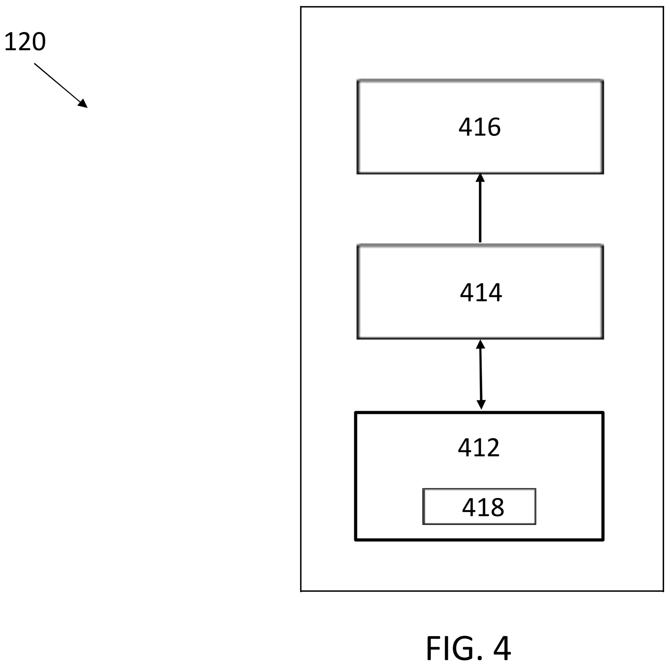

As shown in FIG. 4, central remote system **120** is used to collect and process training data from cloud computing system **150**. In some preferred embodiments, the central remote system **120** is a centralized framework that collects a plurality of training data from a training dataset stored in the cloud computing system **150** and uses the training data to train a machine learning model. In some embodiments, publicly available data (*e.g.* public training data **118**) can also be used to train a machine learning model. In some other embodiments, training data stored in cloud computing system **150** can be used in combination with public training data **118** to train a machine learning model.

Central remote system **120** may comprise a central computing device **412,** which is equipped with GPU **418** to receive and process data to train the machine learning model, a database component **414** consisting of one or more databases and data storage to archive the data and handle data relationships, and a user interface component **416** that allows a user to access the data via for example a web application or an API. User interface **416** can be, for example, a GUI. In some embodiments, a cloud computing system **150** that offers the processing and memory capabilities of, for example, GPU **418** can also be used to train the machine learning model.

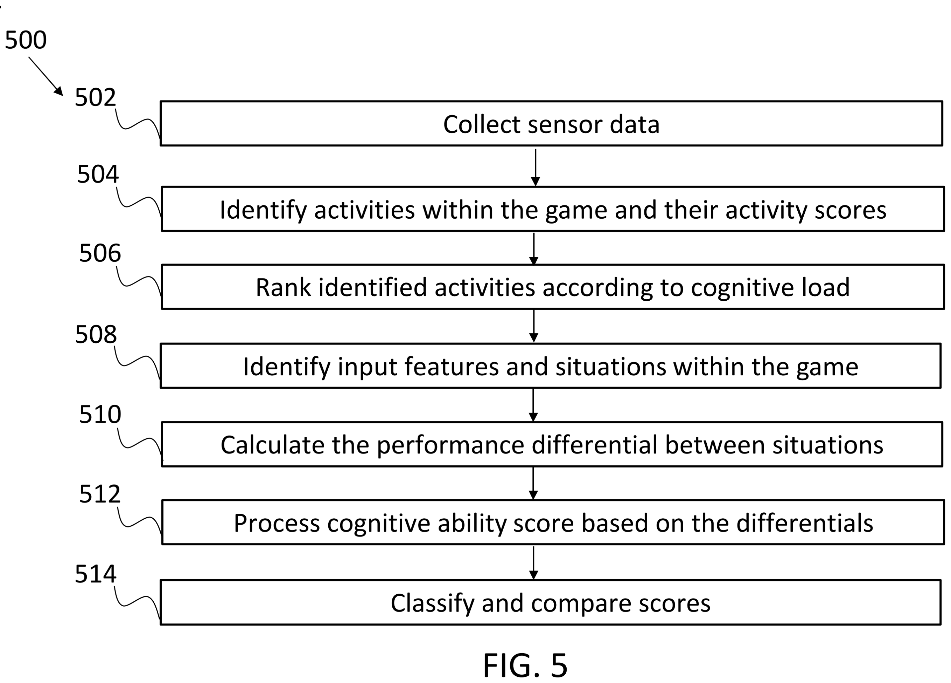

Turning to FIG. 5 which illustrates an example method **500** for tracking a player's IQ. For method **500,** as with other methods taught herein, the various acts may be performed in a different order than that illustrated and described. Additionally, the methods can omit some acts, combine acts, split an act, and/or employ additional acts. Method **500** may be performed by a controller (*e.g.*, edge computing device **240** and/or cloud computing device **352)** in conjunction with other components or systems as may be obvious to a person skilled in the art.

Method **500** begins at **502** where the tracking system collects sensor data at each timestamp. In some embodiments, the sensor data takes into account, all players location, context of game state (*e.g.* power play, zone), video segmentation, image capture, annotator data, etc. The tracking system identifies each player, their assigned position/role during the game and their location throughout a tracked event. The sensor data including player location are refined and standardized and stored in a database such as database **354.**

At **504,** the refined data are processed (*i.e.*, pre-processed data) to identify activities within the game and their activity scores. For example, an activity during play can include, skating in a straight line, skating around obstructions with or without the puck, shooting while skating tangentially, passing while tangentially, etc. In some embodiments, the velocity data of each player while performing an activity can be used to calculate the activity scores. In some embodiments, the various data such as refined location, velocity and acceleration are calculated using mathematical algorithms such as a Kalman filter or a variation thereof. The velocity data can be used to determine the tangential speed of a player at each timestamp using mathematical formulae.

In order to calculate activity scores, the processor evaluates a set of activities (a.k.a., options or decisions), such as pass, shoot, skate, protect, dump, check, cover shot, cover pass, each associated with an activity metric at any given point in time for any given player and assigns a probability value to each activity. In some embodiments, a machine learning model such as a multinomial logistic regression model, with training datasets can be used to evaluate the activity scores of a player.

In some embodiments, success can be defined as a play that is leading to an offensive Zone entry, successful zone exit, play leading to a shot on net or a goal, or all of the above. In order to determine the probabilities, labeled datasets consisting of player status metrics, *e.g.* positioning, velocity, acceleration, proximity to opponents, objects and teammates, and a status activity *e.g.* skating, passing, shooting, dump in, etc. can be used by the machine learning model. In some embodiments, publicly available datasets such as public dataset **118** of FIG. 1 (*e.g.* NHL datasets) can be used to train machine learning models that have these labelled datasets. Such public datasets can be cleaned/filtered to only include successful plays and events for puck carriers/players. For timestamps where the labeled data is missing status activities, the processor fills in an activity from available datasets. In some embodiments where there is no status activity, the processor defaults the activity to "skating".

In some embodiments, an activity metric includes the probability of success of each activity. Therefore, an activity matrix can be made of by a table of rows and columns including the activity metrics for different activities and players. For example, an activity matrix may look like the following table with the probability of success for each activity and each player:

Table 1

|  | Activity 1 | ... | Activity n |
|---|---|---|---|
| Player 1 | Probability (Activity 1) |  |  |
| ⋮ |  |  |  |
| Player n |  |  | Probability (Activity n) |

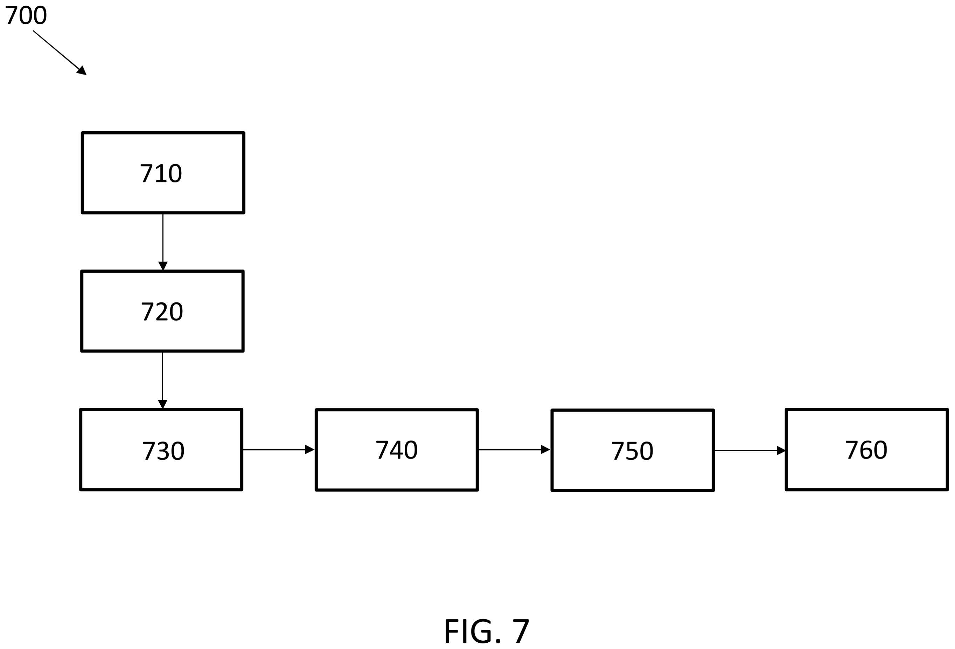

In Table 1 above, probability of success for each activity is shown as a key metric for each player at a given moment in time. The activity metrics such as probability of success evaluate the best activity (a.k.a. option/decision) out of a set of activities for each player at each timestamp. As previously mentioned, and further described in FIG. 7, the probability values can be derived from a suitable machine learning model. By using training data which includes successful plays/best outcome, the machine learning model learns to output the best activity with higher probability values.

Other embodiments may evaluate the number of obstructions at each activity and calculate probability of success. For example, by calculating the passing lane and evaluating the number of obstructions within the passing lane. In yet another embodiment, each activity would have its own unique machine learning model to evaluate the probability of a successful outcome.

Each activity *d* is attributed with an activity metric *D.* In some embodiments, an activity metric is calculated from knowing the best value for a desired outcome, what activity the player chose and what that activity value is worth. For example, the activity metric *D* can be written as a dataset including elements *d*1 through *dn* (i.e., *{d1, d2, ..., dn})*. In some embodiments, *dn* can have a value in the range of zero (0) to one (1) inclusive, which can represent the probability of success.

Since some activity has to be taken at each timestamp, the sum of all the activities *d* can be equivalent to for example, one (1). In some embodiments, the sum calculation can be written as:

$$d1 + d2 + \cdots + dn = 1$$

By taking the actual activity the player made (*e.g. da = actual activity)* and comparing it to the most effective/best activity *(e.g. db = max (dn))*, the activity metric can be calculated as shown below:

$$D = 1 - (db - da)$$

Furthermore, a score/rating for each activity can also be calculated from *da* and db values. In some embodiments, the calculation can include fractions. For example, the activity score can be calculated as shown below:

$$score = \frac{da}{db}$$

For example, if *da* was an activity that was not possible, such as a pass when blocked by a certain number of opponents and teammates are off for a change, then: *da* equals to zero (0), and if the best activity was a dump in, then: *db* equals to some value between zero (0) and (1) which can be represented by variable *x*. The corresponding activity score would therefore equal to zero (0) as shown below:

$$\frac{da}{db} = \frac{0}{x} = 0$$

For example, if the player did dump it in, the actual activity *da* would be equivalent to the best activity *db* and therefore the corresponding activity score would equal to one (1) as shown below:

$$\frac{db}{db} = 1$$

In some embodiments, an activity score of one (1) is considered the best score. For example, if it were an average activity score then: *da* = 0.5(db) which results in an activity score of:

$$\frac{da}{db} = 0.5$$

Furthermore, activity scores can be converted to percentage values. For example, an activity score of 0.75 can be equivalent to 75%. The following table shows an example activity matrix derived from Table 1 for comparison of players of different skill levels at a certain timestamp:

Table 2

| Player | Shoot (75%) | Pass (50%) | Skate (25%) | Activity metric |
|--------|-------------|------------|-------------|-----------------|
| NHL | 1 | 0 | 0 | 1 |
| U18 | 0 | 1 | 0 | 0.75 |
| U15 | 0 | 0 | 1 | 0.5 |

In Table 2 above, the NHL player decided to shoot (as indicated by the corresponding probability of 1) and at that time the best activity was to shoot (*i.e.,* shoot has the highest activity score of 75%). Therefore, the NHL player's activity metric was given a one (1) or 100%. The U18 player decided to pass instead of shooting and was given an activity metric of 0.75. The U15 player chose to continue skating and was given an activity metric of 0.5.

In some embodiments, the activity score for each activity can be varied depending on the skill level of the player. For example, in Table 2 above, a U18 player that decides to pass would be the best activity for that skill level/age group.

In some embodiments, each activity in the activity matrix can have its own machine learning model to train the data and evaluate the probability of a successful outcome. For example, a machine learning model used to evaluate the activity "passing" would evaluate nearby opponents/obstructions and teammates in some proximity to the player holding the puck and determine the probability of a successful pass. In some other embodiments, successful activities can be evaluated by for example, calculating the optimal path, number of obstructions within that path, etc. without the use of a machine learning model.

At **506,** the identified activities are ranked/classified according to the cognitive load. An example activity requiring lower cognitive ability and therefore a lower rank would include, skating in a straight line with no opponents along the way. A slightly higher cognitive ability and therefore a slightly higher rank would include, receiving a pass while stationary. On the higher end of the spectrum, activities that require multiple skills, visual processing and environmental reactions, such as, agility skating with a puck, skating to the net with the puck and shooting, skating with the puck and making a pass, with multiple opponents along the way would be ranked high.

At **508,** input features and certain situations within the game are identified. In some embodiments, the situations may include: battle, breakout, dump-in, etc. The processor also characterizes the assigned position of each player, *e.g.* forward (center, left wing, right wing), defenseman (left, right) and goaltender/goalie. The processor can further identify situations (*i.e.,* game scenarios) which require low or high cognitive function.

In some embodiments, the input features can include the number of opponents in a region of interest, the radial distance to the opponents, player's tangential speed during the time period of the activity, relative tangential speed between players, etc.

Pattern recognition and parallel processing are traditional, accepted cognitive functions. In the context of hockey, there can be instances when a player is able to perform without any obstacles or opponents to worry about while trying to physically perform, such as individual practices or combine skill testing scenarios. In a game, the same/similar situations can occur within a certain radial distance of the player, where there are no immediate obstacles or opponents. These situations require less pattern recognition and parallel processing ability than circumstances within the same radial distance from the player where there are many obstacles or opponents to think about. By identifying higher 'pressure situations' we are able to identify circumstances within a game where higher cognitive functions are required to maintain the same level of performance.

At **510,** a performance differential between situations is calculated. In some embodiments, by measuring an activity that requires high cognitive use in both low and high cognitive functioning game situations (*i.e.,* high/low pressure) across a plurality of instances, the processor can identify a physical performance variable that can be attributed to cognitive ability score. For example, the tangential speed difference of a player with a puck in a high-pressure situation versus with no pressure, the amount of successful shots or passes a player makes while skating in a tangential manner with the puck under pressure versus not under pressure, identifies that players cognitive ability to parallel process, recognize patterns and react.

In an example scenario where a player's top tangential speed when agility skating with a puck under zero to no pressure situations is captured, and their top tangential speed was 22.5 km/hr, the processor identifies the top speed as the player's maximum ability. When the same player's top tangential speed when agility skating with a puck under high pressure situations is captured, where their top tangential speed was 18.5km/hr, the processor identifies this top tangential speed as their maximum ability under high cognitive loads. By using the top tangential speeds identified, the processor can calculate the performance difference. In some embodiments, the difference calculation can be written as:

$$performance\ difference = top\ speed\ (no\ pressure) - top\ speed\ (with\ pressure)$$

Where, according to the above example, the performance difference is 4 km/h (22.5 km/hr - 18.5 km/hr) which is equivalent to 17.7% (*i.e.,* 4/22.5) decline in performance (*i.e.,* performance differential).

In some embodiments, similar measurements can be taken across a number of other activities requiring varying degrees of cognitive ability, measuring performance outcomes from both high- and low-pressure situations. For example, shot accuracy, pass accuracy, percentage times of receiving a pass, activity matrix values of the activities.

Therefore, in some embodiments, the performance differential can be calculated as a percentage difference. Some other embodiments may use statistical or analytical methodologies to derive performance assessments, including but not limited to normal distribution modeling (*e.g.,* bell curve), frequency distribution analysis (*e.g.,* histogram), ordinal ranking algorithms, mean or average-based computations, proportionality-based evaluations, or other suitable mathematical or heuristic techniques configured to characterize relative performance across one or more dimensions.

At **512,** cognitive ability scores based on the differentials are processed. Cognitive ability scores can be adjusted based on the degree of cognitive ability associated with the activity. A player's cognitive ability can therefore be determined through combining the plurality of scores, or classified against the originating abilities. The processor outputs the cognitive ability scores that can be accessed by a user interface (*e.g.* user interface **356**).

In some embodiments, a machine learning model, with training datasets can be used to evaluate the cognitive ability scores of a player. Input features extracted from labeled datasets consisting of player status metrics, *e.g.* positioning, velocity, acceleration, proximity to opponents, objects and teammates, as well as activities, their activity scores, corresponding cognitive load rank and high/low pressure event situations (*e.g.* skating, passing, shooting, dump in) can be used by the machine learning model. In some embodiments, publicly available datasets such as public dataset **118** of FIG. 1 (*e.g.* NHL datasets) can be used to train machine learning models that have these labelled datasets. Such public datasets can be cleaned/filtered to only include the relevant plays and events for puck carriers/players.

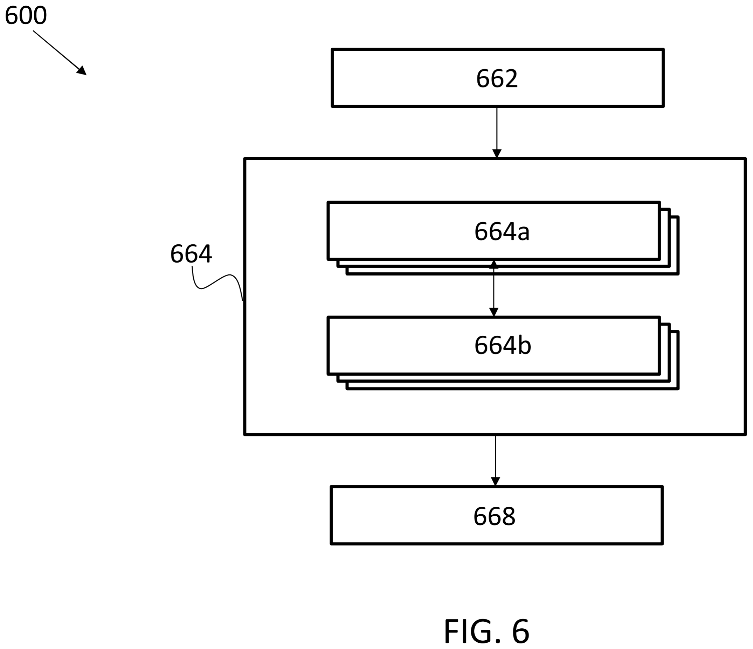

The machine learning model outputs the cognitive ability scores which in some embodiments can be normalized to a scalar value between zero (0) and one (1). In some embodiments, the machine learning model can use a neural network such as neural network **600** of FIG. 6 to determine the cognitive measurements. In some embodiments, the cognitive ability scores can also be converted to a percentage value.

At **514,** the cognitive ability scores are classified based on the cognitive load and compared with previously recorded cognitive ability scores of the same player. The cognitive load can be classified using cognitive load ranks from step **506**. The cognitive ability scores can be compared with similar measurements acquired from previous machine learning models for similar game situations. The comparative measurements can be used for evaluation as well as to identify areas of improvement.

The cognitive ability scores of a single player can also be aggregated, compared and benchmarked against a series of tracked events as well against other players to assess a player's game IQ and areas of improvement throughout the season and when compared to other players.

Since a gameplay includes dynamic events, the activity metrics can change at every timestamp. Therefore, in some embodiments, the activity metrics can be calculated at time $T_0$ (when the puck was received) and then again at time $T_1$ (when play is made) and calculate the improvement or decline in performing that activity. Sometimes a pass is only the right choice of activity if made NOW, not one second later. This calculation would thus be a difference calculation in optimal activity metrics.

For example, for a set of activities at time $T_0$, the processor evaluates each output activity and compare each activity to the actual activity performed by the player. If the player chose to skate with the puck instead of passing, where passing is considered the optimal activity at time $T_0$), then the processor uses the activity score calculation to evaluate the player's activity at time $T_0$. A similar logic is performed by the processor for each player and for each subsequent timestamp $T_n$. In some embodiments, the processor may only choose to evaluate the activity scores for players in possession of the puck and/or within close proximity of the puck.

In some embodiments, the processor can compute activity metrics at each given interval time (*e.g.,* every tenth of a second). In some embodiments, the optimal activity time can be determined after studying the results of the tracked event. For example, if players tend to get better activity scores at a certain tangential speed level, then calculating the activity metrics around that level of tangential speed can determine the optimal activity time(s).

In some embodiments, the optimal activity time calculation could be a difference in time measurement (*i.e.,* delta time). While a player has the puck, the processor can calculate activity scores for each activity metric and search for a time prior to the player's play that had a higher activity score for the same activity metric. Since the processor can record each player's activity score at each timestamp, a threshold for activities determined by the processor can be set within a given time period (*e.g.,* one to five seconds) and the activity scores can be evaluated over the given time period. The activity scores evaluated over the given time period can therefore be used to assess if a certain activity (*e.g.,* passing, skating or shooting) at time $T_1$ is preferred over the activity performed at time $T_4$.

For example, if passing had an activity score of 0.5 at time $T_4$ and three (3) seconds earlier (*i.e.,* at time $T_1$) the activity score for passing was 0.75, this indicates that the player held on three (3) seconds too long and lost 0.25 (*i.e.,* 25%) from the activity score. In some embodiments, there may be a threshold percentage difference which determines whether the player made the right choice of activity during the right period of time or whether the activity chosen was made beyond the threshold which indicates that the activity was performed too early/too late.

Therefore, in some embodiments, the processor can calculate activity scores in various ways which can also be used to calculate cognitive ability scores for each situation within the game. In some embodiments, the performance metrics evaluated from the activity matrix can be a measure of how often the player takes the optimal course of action over the course of a game (*e.g.,* measured as an average score, percentage, histogram, mapping).

In some embodiments, a machine learning system including a plurality of machine learning models can be used to evaluate a player's IQ.

FIG. 7 shows a machine learning system **700** including machine learning model **720** used to evaluate activity scores and machine learning model **750** used to evaluate the cognitive ability scores. Pre-processed data **710** consisting of player specific inputs are applied to machine learning model **720** for every timestamp of the players. A pre-processing pipeline extracts the necessary data for the relevant game model from a series of data including, but not limited to, player relative location, player relative speed, time remaining in the game, game score, player's time on ice, possession/contention and player's historical shooting and passing records. In some embodiments, separate game models can be maintained for each competition level, continuously trained and updated as new data becomes available.

Each game model can be categorized by the skill level. Therefore, each game model can have similar pre-processed data **710** weighted differently due to the nature of the data deriving from different skill levels. The pre-processing pipeline can run a series of functions. In some embodiments, a function can extract the player locations and calculate the relative positioning, speed and/or acceleration. Similarly, another function can query and pull historical data related to the player on their shooting and passing abilities from previous games. In some embodiments, queries can be fine tuned to situation specific or general.

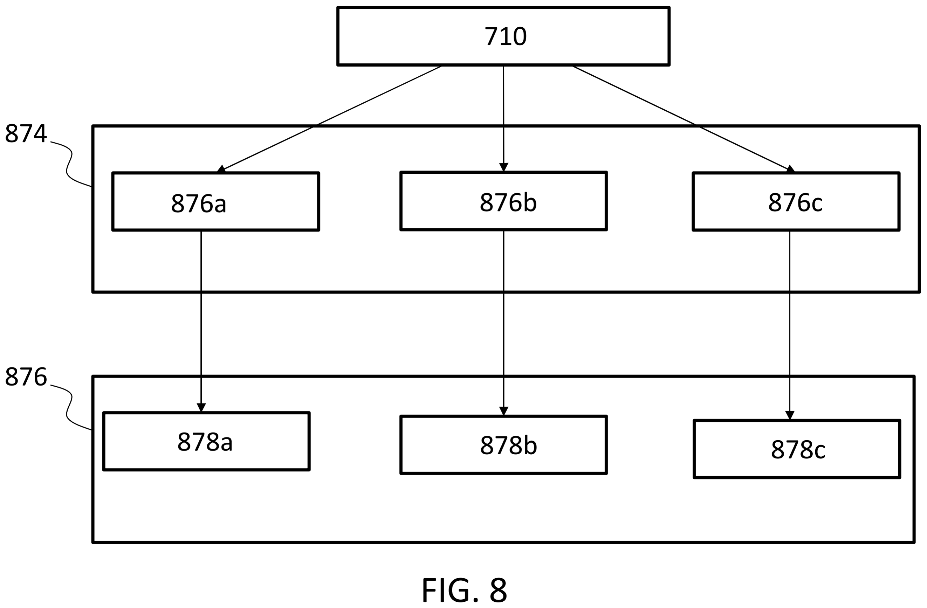

As previously mentioned, in some embodiments, machine learning model **720** can include a multinomial logistic regression machine learning model such as logistic regression model **874** of FIG. 8. Various embodiments of logistic regression model **874** is described herein including in relation to FIG. 4, FIG. 5 and FIG. 7.

The pre-processed data **710** can also be encoded to include a plurality of potential activities **876**, including, for example, passing, shooting, dump-in, skating. In some embodiments, other potential activities such as changing, breakout, etc. can also be included. For each of the plurality of potential activities **876,** a value of either zero (0) or one (1) can be assigned such that the activity that was assigned a one (1) indicates which activity was performed and zero (0) indicates which activities did not take place for that timestamp. Based on the status metrics which in some embodiments can include current location of the player and their obstructions, proximity to other players, tangential speed, acceleration, context of game play (*e.g.* power play, zone) logistic regression model **874** performs a series of transformations to train the model and to learn the best activity for each timestamp.

Logistic regression model **874** of FIG. 8 can output a plurality of probabilities **878** for each activity at each timestamp. In some embodiments, the plurality of probabilities **878** can include an output vector **876** which includes the probabilities of each of the corresponding plurality of potential activities **874**. An example output vector **876** for a random formation of players near center ice can include: [skating: 0.74, passing: 0.16, shooting: 0.01, dump in: 0.09]. Therefore, the best activity is chosen as the one with the highest probability (*i.e.,* max(activity) = skating). The probability of that activity successfully happening based on the logistic regression model **874** and status of puck carrier and formation of other players (*i.e.,* probability of success) is the highest probability (*i.e.,* max(probability) = 0.74 ↔ 74%).

Other embodiments may utilize alternative machine learning architectures to calculate the plurality of probabilities pertaining to each activity at each timestamp including, but not limited to: Support Vector Machines (SVM), probabilistic machine learning algorithms such as Naïve Bayes (with the assumption of feature independence), tree-based models such as Random Forests, Gradient Boosting Machines (GBM) such as xGboost.

Returning to FIG. 7, in some embodiments, the probability values of each activity at a certain timestamp sum to one (1). The processor compares the activity taken place at a certain timestamp to the best activity and calculates a plurality of activity scores **730** for each timestamp. In some embodiments, the activity score calculation can include fractions. Continuing the example from above, if the player made a pass, then their activity score would be 16/100 whereas if the player skated with the puck, their activity score would be 74/100.

The activity scores **730** are calculated from the output of machine learning model **720** for all players throughout the tracked event. The activity scores **730** are classified based on pressure versus no-pressure situations. For example, activity scores **730** of high-pressure situations can be based on situations where there were more than one opponent/obstruction in close proximity to the player in a certain region of interest (*i.e.,* a circle of five (5) meter radius), whereas activity scores **730** of no-pressure situations can be based on situations where there were no opponents/obstructions in close proximity to the player in the same region of interest.

The activity scores **730** along with input features **740** which, in some embodiments, can include: number of opponents in close proximity to the player, distance to opponents/obstructions, tangential speed of players, relative tangential speed between players, etc. can then be applied to machine learning model **750.**

Machine learning model **750** outputs a cognitive measurement **760** (*i.e.,* cognitive ability scores as described in step **510** of FIG. 5) based on pressure versus no-pressure situations. The cognitive measurement **760** can then be classified and compared for each player throughout the event or gather top cognitive ability scores for each player throughout the event to benchmark results. As previously described, in some embodiments, the machine learning model **750** can include a neural network such as neural network **600** as shown in FIG. 6.

FIG. 6 shows a neural network **600** in accordance with the present disclosure. Various embodiments of neural network **600** is described herein including in relation to FIG. 4, FIG. 5 and FIG. 7. As shown in FIG. 6, a neural network is composed of "layers", which are the foundations that process data and perform computations to solve a specific task. Each layer consists of one or more "neurons" (or "nodes") that apply a mathematical operation to the input data and pass the result to the next layer. In some preferred embodiments, the neural network **600** consists of an input layer **662,** an intermediate layer **664** which includes a plurality of hidden layers **664a** and a plurality of dropout layers **664b,** and output layer **668.**

Input layer **662** is the first layer of the neural network **600,** which receives the input data. A multidimensional array consisting of input features (*e.g.* input features **740** of FIG.7) are represented as an input layer. For example, a multidimensional array of ninety-nine (99) input features would have an input layer where each data point is represented by a vector of ninety-nine (99) features.

The plurality of hidden layers **664a** is in the intermediate layer **664** between the input layer **662** and output layer **668,** where transformations and learning occur. For example, a neural network **600** may have eight (8) hidden layers **664a,** with each of the plurality of hidden layers **664a** configured to have two-hundred and fifty (250) input data. Each of the plurality of hidden layers **664a** applies a transformation to the data. In some embodiments, the transformation can include a linear operation followed by a non-linear activation function.

Activation functions introduce non-linearity to the neural network **600**, allowing it to model complex relationships in data. Some commonly used activation functions include Rectified Linear Unit (ReLU), Sigmoid and Tanh. Some preferred embodiments of the present disclosure use the ReLU activation function. In some embodiments, the activation function can use a weighted some of inputs. For example, the ReLU activation function can be written as:

$$ReLU(x) = max(0, x)$$

Where, x is the input data of input layer **662** streamed to the neural network **600** which can be a weighted sum of inputs to the neuron. Typically, each of the plurality of hidden layers **664a** is followed by an activation function.

The plurality of dropout layers **664b** perform a regularization technique that randomly sets a fraction of the neurons to zero during training to prevent overfitting. For example, a dropout rate of 0.5 means 50% of the neurons in the dropout layer are randomly "dropped out" or set to zero during each training iteration. This helps neural network **600** generalize better by forcing the network to rely on different combinations of neurons, rather than overfitting to specific patterns or features in the training data. In some preferred embodiments, each of the plurality of dropout layers **664b** are interspersed between some of the plurality of hidden layers **664a.** In some embodiments, each of the plurality of hidden layers are applied to fully connected layers or between input-to-hidden or hidden-to-hidden layers. In some other embodiments, dropout layers such the plurality of dropout layers **664b** are applied strategically in layers where overfitting is a concern, and where neurons are densely connected, making them more likely to overfit.

Output layer **668** is the final layer of the neural network **600,** which produces its output. The size of the output layer **668** depends on the task (e.g., classification or regression). For a classification task, the size equals the number of classes which gives a probability value or an array/vector of probabilities, while for regression, it can be a single continuous scalar value or a vector representing the predicted value(s) of continuous variables. In some preferred embodiments, the output of the neural network **600** is scalar value indicating the cognitive ability score of a player at a given timestamp. The neural network **600** repeats/reiterates the above steps over the entire dataset which is typically broken into smaller batches of data for a fixed number of passes through the entire dataset (a.k.a. epochs), until it reaches convergence.

Other embodiments may utilize alternative learning architectures to calculate the cognitive ability scores, including, but not limited to: Graph Neural Networks (GNN), attention-based models, Convolutional Neural Networks (CNN), Recurrent Neural Networks (RNN) such as Long Short-Term Memory (LSTM) networks.

As previously mentioned, a player's tangential speed with the puck in a controlled practice or combine testing environment will determine what the player is physically capable of, whereas their tangential speed with the puck during a five-on-five game with an increase of pressure situations will determine the cognitive impact on their ability to physically perform. In some embodiments, having a low difference can grant a high player IQ, where a high difference would grant a lower player IQ.

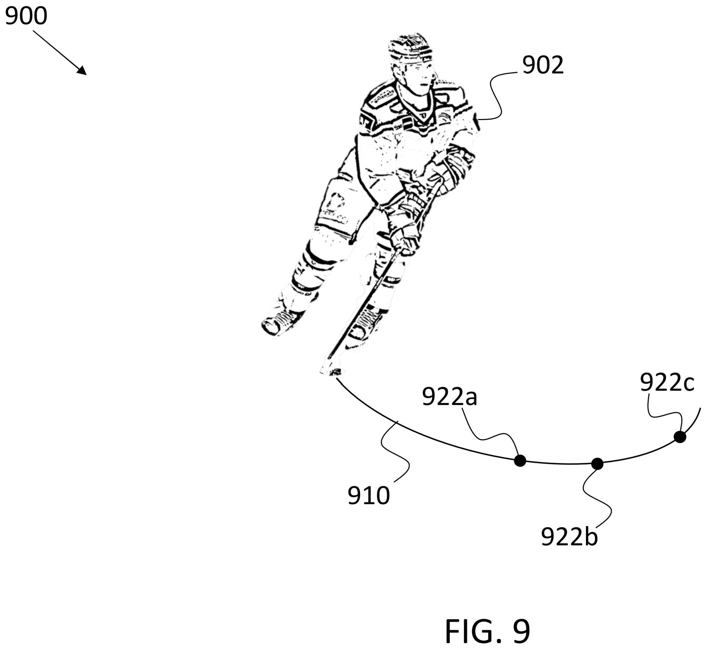

In order to determine the tangential speed of a player, one needs to determine the direction of the player and/or skating angle. FIG. 9 shows an example segment of a trajectory **900** of a player **902** in motion at a given timeframe. Using at least three sequential positional data points obtained from the player sensors such as player sensor tag **232,** the angle of the player's trajectory (i.e., skating angle) can be calculated to determine whether the player has turned to the left or right. For example, by taking the x,y coordinates of three consecutive points A, B and C at approximately 0.1(s) intervals of player **902** travelling along path **910** of FIG. 9 where point A corresponds to point **922a,** point B corresponds to point **922b** and point C corresponds to point **922c,** the angle theta ($\theta$) between the vectors AB (from A to B) and BC (from B to C) formed at point B can be calculated. In some embodiments the calculation can use an inverse trigonometric formula with an inner product. For example, the formula can be written as:

$$\theta = arccos \left( \frac{AB \cdot BC}{|AB| \cdot |BC|} \right)$$

The resulting angle quantifies the player's change in direction. In some embodiments, a skating angle in the range of -5 degrees to 5 degrees indicates that player **902** travelled linearly (i.e., in a straight line). Consequently, a skating angle outside the range of -5 degrees to 5 degrees is considered to be angular. By segmenting the skating angle (*e.g.* angular/linear) and incorporating the velocity data corresponding to each timestamp, the tangential speed of a player can be determined.

A further calculation can be used to determine if player **902** turned to the left or right. In some embodiments a two-dimensional cross product formula (or determinant) can be used. For example, the formula can be written as:

$$Cross\ Product = (x_2 - x_1)(y_3 - y_2) - (y_2 - y_1)(x_3 - x_2)$$

Where $x_1$ and $y_1$ are the x,y coordinates of point A, $x_2$ and $y_2$ are the x,y coordinates of point B and $x_3$ and $y_3$ are the x,y coordinates of point C. A positive result indicates a left turn (counterclockwise), while a negative result indicates a right turn (clockwise).

The data tables of each player can be mapped to illustrate a player's fluctuation in tangential speed when confronted with obstacles. In some embodiments, the obstacles include number of opponents, net, boards or a combination thereof within a region of interest.

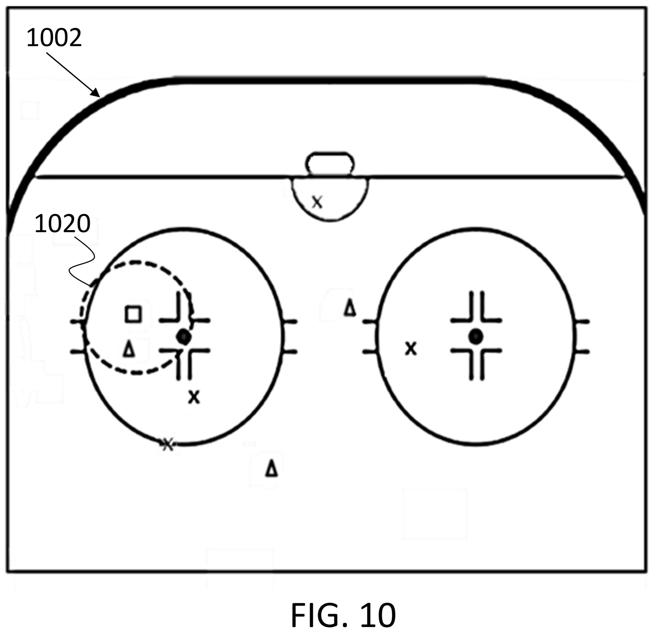

FIG. 10 shows a visual representation of relative player positions overlaid on a partial playing area **1002** at a given time where the dashed line represents region of interest **1020.** Region of interest **1020** is a subset of the playing area **1002** which represents a 2.5-meter radius (*i.e.*, a circle with a diameter of five (5) meters).

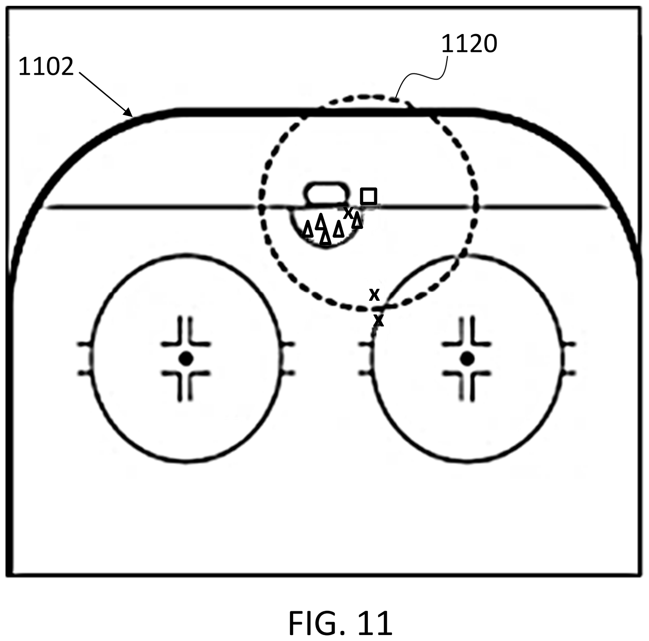

Similarly, FIG. 11 shows a visual representation of relative player positions overlaid on a partial playing area **1102** at a given time where the dashed line represents region of interest **1120**. Region of interest **1120** is a subset of the playing area **1102** which represents a five (5) meter radius (*i.e.*, a circle with a diameter of ten (10) meters).

The square in the middle of region of interest **1020** of FIG. 10 and region of interest **1120** of FIG. 11, represents the player. The triangles represent the opponents and the crosses represent the team players. As shown in FIG. 10, region of interest **1020** includes the player of interest and one opponent which in some embodiments can be ranked as a low-pressure situation. As shown in FIG. 11, region of interest **1120** includes the player of interest, two other team players, five opponents and a net which in some embodiments can be ranked as a high-pressure situation.

The processor calculates the tangential speed of the player of interest at each relevant timestamp and generates aggregated data for the player. In some embodiments, each player can have three tables displaying information about the tangential speed of the player facing n ([1,2,3,4,5]) opponents in a circle of x ([5, 10, 15]) meters in diameter. For each situation, the processor aggregates all events and can calculate the mean/average and maximum tangential speed.

The following is a table including an example player's mean and maximum tangential speed when faced with n ([1,2,3,4,5]) opponents in a circle of ten (10) meters in diameter:

Table 3

| Opponents | mean (m/s) | max (m/s) |
|---|---|---|
| 1 | 5.50 | 15.91 |
| 2 | 4.73 | 12.69 |
| 3 | 4.43 | 9.85 |
| 4 | 3.58 | 9.16 |
| 5 | 1.15 | 1.19 |

Similar to Table 4, Table 5 below shows the mean and maximum tangential speed of the same example player when faced with n ([1,2,3,4]) opponents in a circle of fifteen (15) meters in diameter:

Table 4

| Opponents | mean (km/hr) | max (km/hr) |
|---|---|---|
| 1 | 8.25 | 20.44 |
| 2 | 7.40 | 19.09 |
| 3 | 7.00 | 19.06 |
| 4 | 6.99 | 15.84 |

As can be seen by Table 3 and Table 4, the player has a tendency to slow down when confronted with an increasing number of opponents (i.e. increase in pressure). Furthermore, the player tends to skate faster when the opponents are more spread out (i.e., larger circle/region of interest and hence decrease in pressure).

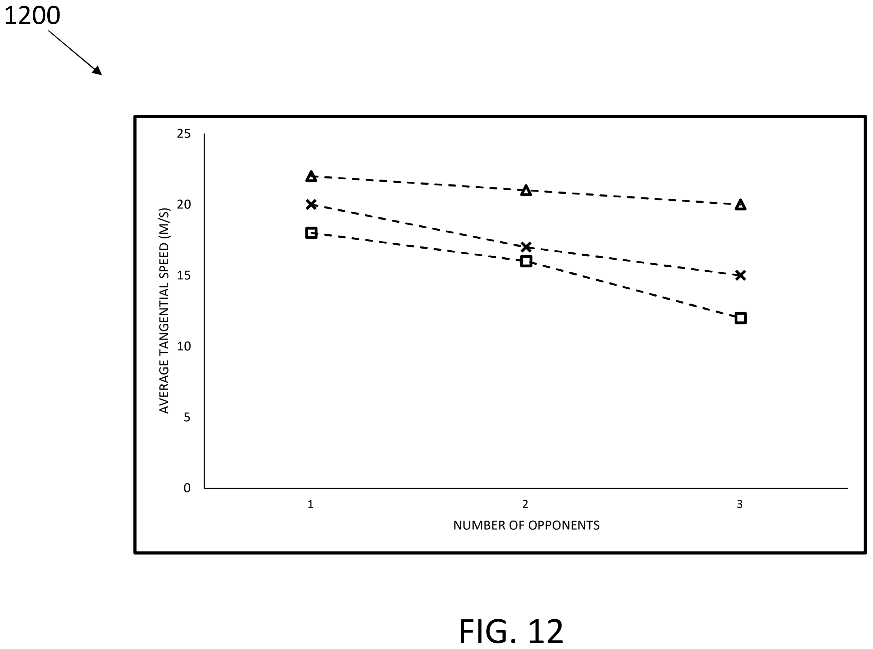

FIG. 12 shows a plot **1200** which includes number of opponents versus average tangential speed of three players with different skill levels during a tracked event. The data points shown as squares represent a U15 player and the data points shown as crosses represent a U18 player. Further, the data points shown as triangles represent a professional-level (*i.e.,* NHL) player. The number of obstructions is within a circle of ten (10) meters in diameter where each player is considered to be in the middle of the circle. As previously mentioned, the average tangential speed is calculated by aggregating each event during a live gameplay/practice.

As shown in FIG. 12, all three players show a decrease in tangential speed as the number of opponents (*i.e.,* pressure) increase, the professional-level player maintains a higher angular speed across all opponent counts compared to the U18 and U15 players. This may suggest that the professional-level player's ability to perform under pressure is better than the amateur players. In some embodiments, the data shown in FIG. 12 can therefore be an indication that the cognitive ability of the professional-level player is valued greater than amateur players. In FIG. 12, a slope calculation of speed decline can be used to determine cognitive ability where a higher slope as in the U15 player grants a lower cognitive ability score than a smaller slope as in the professional-level player. Similarly, a medium slope as in the U18 player would grant a medium cognitive ability score.

Furthermore, the U15 player shows a rapid decline in tangential speed when confronted with three opponents within a ten (10) meter circle, whereas the professional-level player maintains a steadier decline in tangential speed. The steeper drop (a.k.a. slope) in angular speed of the U15 player may suggest a sharper performance impact under pressure when compared to the professional-level player as well as the U18 player. In some embodiments, such evaluations can be an indication that the U15 player's cognitive ability (*i.e.,* IQ) declines more rapidly than the higher-level players in high-pressure situations. It can further be an indication that professional-league/higher-level games are played at a faster pace.

Therefore, in FIG. 12, a slope calculation of speed decline can be used to determine cognitive ability where a higher slope as in the U15 player grants a lower cognitive ability score than a smaller slope as in the professional-level player. Similarly, a medium slope as in the U18 player would grant a medium cognitive ability score. Therefore, in some embodiments, tangential speed can be considered a physical skill as well as a cognitive function which can be used to determine a player's performance under pressure versus no-pressure.

As previously mentioned, by using metrics such as activity scores, tangential speeds, ranked activities, performance differentials under varying level of pressure, etc. the processor can measure a player's cognitive abilities. In some embodiments, a player with a low difference in performance under varying levels of pressure can be awarded a higher cognitive ability score than a player with higher difference. This type of insight into a player's cognitive skill can be used for coaching feedback, training, scouting, etc. Furthermore, it helps realize a player's ability to react to certain pressure situations in a live sporting event. As previously mentioned, the processor can evaluate the cognitive measurements of a player throughout a season and when compared against the player's teammates, and the team as a whole.

As such, the present disclosure includes systems and methods of collecting detailed positioning, velocity and tactical patterns of athletes and/or equipment during a live sporting event relative to attributes of the playing field, identifying activities, activity scores, game situations and roles of each player, ranking the activity scores according to the cognitive load, evaluating performance differentials according to the ranking, determining a cognitive ability score based on the performance differentials, classifying the data and presenting findings in order to meet the above objectives.

Embodiments also include a data processing algorithm to align data to a time series to identify and evaluate game situations at any moment. From this time aligned data, processing is used to identify situations, player roles and weighted activities. Some embodiments may utilize machine learning based on situational training data, whereas other embodiments may utilize classification-based algorithms and rules.

Embodiments also include algorithms to determine when a key activity was performed, the activity score, and when the activity was performed relative to the optimal time.

Embodiments also include algorithms to assess the outcome of activities within a limited time window to determine an outcome. Embodiments also utilize this information to assess a player's ability to select which techniques to employ and their ability to perform the techniques in in a similar situation with added pressure versus no-pressure.

Embodiments of the present disclosure include a database to store information and some embodiments include a user interface to access information whereas others may include an API for other systems to access information.

Embodiments of the present disclosure further assist players in recognizing patterns and parallel processing when confronted with particular situations. This is done through capturing many similar situations, identifying the common traits the player employs amongst them, presenting benchmark data to the player and identifying performance differentials as compared against the benchmarks. Embodiments of this also include replaying the situations while highlighting the various activities and pressure situations available to the player in addition to the performed activity.

Cognitive ability is aggregated and compared against other players to give insight into player's game IQ and to provide a better assessment and understanding of how a player handles which situations.

PLAYER LOCATION

Embodiments may comprise specific types of sensors to accurately track the location of players over time during a live sporting event. A network of rink antennas captures the sensor data and transfers the data to a computing device that processes the data using mathematical algorithms and outputs a set of refined/improved set of location data at any given timestamp.

The raw sensor data is refined and standardized by filling in missing data points using mathematical algorithms to have a larger set of equally-spaced data points for each player at a given timestamp. The data is converted into a refined x,y location data set by applying a mathematical algorithm which can then be used to determine speed, velocity and acceleration. In some embodiments, the mathematical algorithm can be a Kalman filter or a deviation thereof.

KALMAN FILTER

A Kalman filter is a mathematical algorithm used for estimating the state of a dynamic system from a series of incomplete and noisy measurements. It operates in two main steps: prediction and update.

Prediction: The filter uses the current state of the system and a mathematical model to predict the next state. It also estimates the uncertainty in this prediction.

Update: When new measurements become available, the filter updates its predictions based on these observations, taking into account the noise and uncertainty in the measurements. It combines the predicted state with the new measurements to produce a more accurate estimate.

A Kalman filter can estimate acceleration from the positions of players over time by modeling the system's dynamics and applying recursive estimation techniques. The Kalman filter processes noisy position measurements to infer the hidden variables, such as velocity and acceleration, by utilizing a state-space model that includes the relationships between position, velocity, and acceleration. To determine acceleration, the filter processes sequential measurements of player positions, estimating their velocities based on the difference in positions over time. By further differentiating the velocity, the filter can derive acceleration, allowing it to effectively smooth out noise and provide the ultimate estimation of players' motion.

A state model or a state-space model is a mathematical framework used to describe the behavior of a dynamic system by defining its current status, or state, in terms of relevant variables such as position, velocity, and acceleration. The model typically consists of two key elements: state transition model, which predicts how the system evolves over time based on its previous state, and an observation model or a measurement model, which relates the system's state to measurable outputs (e.g., sensor readings). The state model allows for the estimation of hidden variables and future states, often under conditions of uncertainty, using techniques like Kalman filters or particle filters and the like. For example, the Kalman filter can determine refined position from position measurements by the following steps:

1. State-Space Model

The system's initial state can be defined to include position, velocity, and acceleration. In some embodiments including two-dimensional motion (e.g., along the x-y axes), the state vector $P$ can also be known as the initial state covariance matrix $P$. For example, the state vector $P$ can be written as:

$$P = \begin{bmatrix} x & y & v_x & v_y & a_x & a_y \end{bmatrix}$$

where x and y are the positions of the player, $v_x$ and $v_y$ are the velocities and $a_x$ and $a_y$ are the accelerations in the x and y directions. In some embodiments, matrix $P$ defines the errors between the different parameters in the initial state estimates.

2. State Transition Model

The state transition model predicts the next state based on the current state. Assuming constant velocity motion, in some embodiments, the state transition matrix $Q$ can also be known as the transition state covariance matrix $Q$. For example, the state transition matrix $Q$ can be written as:

$$Q = \begin{bmatrix} 1 & \Delta_t & 0 & 0 & 0 & 1 & 0 & 0 & 0 & 0 & 1 & \Delta_t & 0 & 0 & 0 & 1 \end{bmatrix}$$

Where $\Delta_t$ is the time step between measurements. This matrix assumes that position changes based on velocity over time. In some embodiments, the basic form of the state update is a vector/matrix multiplication formula which may also include summation. For example, at time $k$, the state vector $x_k$ can be written as:

$$x_k = Q x_{k-1} + w_{k-1}$$

Where $Q$ is the state transition matrix, $x_{k-1}$ is the state vector at the previous time step and $w_{k-1}$ is the process noise. In some embodiments, matrix $Q$ defines the errors between the same state parameters within each time step, due to, for example, noise in the system.

3. Measurement Model

The measurement model can define how the actual state vector is mapped to the measurements that can be observed. It can help the filter update its state estimate based on new information received from sensors or other data sources. In some embodiments, the measurement model can be expressed as a vector/matrix product including summation. For example, at time $k$, the measurement vector $z_k$ can be written as:

$$z_k = R x_k + v_k$$

Where R is the measurement noise/error matrix (a.k.a. observation covariance matrix), $x_k$ is the state vector at time $k$ and

$v_k$ is the measurement error at state $k$. For example, the measurement noise/error matrix can be written as:

$$R = [0.5^2 \; 0 \; 0 \; 0.5^2]$$

Where 0.5 represents the maximum error in the measurement device in the $x$ and $y$ coordinates.

In some embodiments, the measurement model can be further expressed by a vector/matrix product including summation. For example, the next state $x_{k+1}$ can be written as:

$$x_{k+1} = Fx_k + wz_k = Hx_k + v_k$$

where $x_k$ is the current state. In the above equation, the next state $x_{k+1}$ is modelled by the current state at $k$ moved by a process defined by a state process $F$ and noise w. Since no system follows a mathematical model perfectly, the noise w is added to the equation. Similarly, since no measurement is perfect, error $v_k$ is added.

In the above equation, $F$ is the state process which describes how the system evolves over time. For example, the state process $F$ can be written as:

$$F = \begin{bmatrix} 1 & dt & 0.5(dt)^2 & 0 & 0 & 0 \\ 0 & 1 & dt & 0 & 0 & 0 \\ 0 & 0 & 1 & 0 & 0 & 0 \\ 0 & 0 & 0 & 1 & dt & 0.5(dt)^2 \\ 0 & 0 & 0 & 0 & 1 & dt \\ 0 & 0 & 0 & 0 & 0 & 1 \end{bmatrix}$$

where $dt$ is the difference in time between state $k$ and $k+1$. These values can be derived from existing kinematic equations.

4. Prediction and Update Steps

The Kalman filter operates in two phases: Prediction and Update; Prediction: Based on the previous state estimate, the Kalman filter predicts the next state (position, velocity, and acceleration) using the state transition model. Update: The filter then corrects its predictions using the observed position or measurement model and Kalman gain, which determines how much to adjust the state estimate based on the new measurement and which optimally combines the predicted state and the measurement, taking uncertainties into account.

5. Recursive Estimation of Acceleration

At each time step, the Kalman filter predicts the player's position, velocity, and acceleration based on the previous estimates and the state transition model and updates these predictions using the new position measurement.

CONVERGENCE OF A MACHINE LEARNING MODEL

In order for a machine learning model to reach convergence, a certain criterion has to be met. As previously mentioned, each iteration refines the machine learning model's parameters (weights and biases) to better predict the target outcomes. For example, a loss function measures the difference between the predicted outputs of a machine learning model and the actual target values. It quantifies how well (or poorly) the model is performing and guides the optimization process to improve predictions. The goal of training a machine learning model is to minimize the loss function, which improves the model's accuracy on the task. The choice of loss function depends on the task. The tasks can be categorized as a regression task or a classification task.

A regression task involves predicting a continuous value, where the output is a single real-valued number. For a Regression task, Mean Squared Error (MSE) or Mean Absolute Error (MAE) can be used to compute the loss function. Some embodiments of the present disclosure output a probability distribution over classes where the highest probability is interpreted as the best activity at a given time. For a classification task, Cross-Entropy Loss, Hinge Loss and the like can be used to compute the loss function.

Cross-Entropy Loss measures how well the predicted probability distribution matches the true distribution. For a single data point in a classification task, the Cross-Entropy Loss can be calculated using a mathematical formula. In some embodiments, the calculation can use a sum of a logarithmic formula including a scalar product. For example, the formula can be written as:

$$Cross - Entropy\ Loss\ =\ -\sum_{i=1}^{C} \Box\ y_i \cdot log(\hat{y}_i)$$

Where, in some embodiments, $y_i$ is the actual label in which $y_i = 1$ if the data belongs to class $i$, and $y_i = 0$ otherwise. Furthermore, $\hat{y}_i$ is the predicted probability for class $i$ and *log* is the natural logarithm. For a batch of data, the loss is averaged over all data points. The predicted probability for class $i$ can be calculated by the use of a mathematical function selected from a plurality of mathematical functions including, softmax function, sigmoid function, sparsemax, or Gumbel-softmax and the like. For example, machine learning models typically output raw scores called "logits" for each class. These logits can have any value (positive or negative); however, they are not probabilities. In some embodiments, a mathematical function can convert raw scores (logits) into probabilities. For example, the "softmax function" can use fractions which can be written as:

$$\hat{y}_i\ =\ \frac{e^{z_i}}{\sum_{j=1}^{n} e^{z_j}}$$

Where $z_i$ is the logit for class $i$. If the predicted probability for the correct class is high, the logarithmic term ($log(\hat{y}_i)$) is small, resulting in a small loss. For example, if the probability is one, or in other words 100%, $log(1)$ assumes zero. Alternatively, if the predicted probability for the correct class is low, the logarithmic term ($log(\hat{y}_i)$) becomes large resulting in a high loss. For example, if the probability is zero, $log(0)$ is undefined, or in other words very high. In some embodiments, cross-entropy loss function rewards the machine learning model for predicting high probabilities for the correct class while penalizing incorrect predictions.

An optimization algorithm in a machine learning model is a method used to adjust the network's parameters (weights and biases) to minimize the loss function, which quantifies the error between the model's predictions and the actual outcomes. The goal of optimization is to find the set of parameters that reduce the loss, improving the model's performance. Optimization is an iterative process, and the choice of algorithm can impact the efficiency and effectiveness of training a machine learning model.

An optimization algorithm can be used to minimize the loss calculated by, for example, Cross-Entropy Loss function, which measures the error between the model's predictions and the true labels. The suitable type of optimization algorithm depends on the specific problem, dataset, and computational resources. In some embodiments, an optimization algorithm such as Adaptive Moment Estimation (a.k.a. Adam) is used. Adam optimizer combines the strengths of two other optimizers: Momentum, which smooths updates by considering the moving average of past gradients and Root Mean Square Propagation (RMSProp), which adapts learning rates based on the magnitude of recent gradients for each parameter. Each parameter in the optimization algorithm gets its own learning rate that adjusts dynamically based on the gradients to provide faster convergence and better results in practice.

In other embodiments, optimization algorithms such as Stochastic Gradient Descent (SGD), Adam with Weight Decay (AdamW), Adaptive Gradient Algorithm (AdaGrad) or any other suitable algorithm or a combination of algorithms can be used to minimize loss and achieve fast and stable convergence.

Some additional examples are provided below.

In one example, a system as described in one of the claims below, comprises a datastore of definitions for region of interest for each sports situation.

In one example, a system as described in one of the claims below, further comprises a tracking system for locating a sports projectile within the sports area.

In one example, a system as described in one of the claims below, wherein calculating athletic intelligence is further based on the sports projectile successfully leaving the region of interest.

In one example, a system as described in one of the claims below, further comprises a datastore for a decision matrix storing values for the athletic intelligence metric for options, for each sports situation.

As used herein, a reference to "about", "approximately", or "near" a number or to being "substantially" equal to a number of means being within +/- 10% of that number.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

**EP 4 769 337 A1**

**Claims**

1. A method of calculating athletic intelligence comprising the steps of:

tracking locations of athletes within a sports area;
computing speed and trajectory for each athlete;
classifying that a sports situation associated with cognitive influence is occurring based on the locations and trajectories of the athletes within a region of interest; and
calculating an athletic intelligence metric for a given athlete based on their speed and changes in their trajectory during the sports situation.

2. The method of claim 1, wherein tracking comprises video processing a video capturing the athletes to automatically identify each athlete and determine their location.

3. The method of claim 1, wherein tracking comprises sensors and transceivers worn by each athlete.

4. The method of claim 1, wherein classifying uses an artificial intelligence model trained on sports situations that are labelled with degree of cognitive influence.

5. The method of claim 1, wherein the degree of cognitive influence increases with the speed and presence of one or more of: number of athletes; athletes that are opponents; number of obstacles; referees; and boundaries of the sports area.

6. The method of claim 1, wherein the region of interest is defined by a boundary surrounding one of the athletes carrying a sports projectile and dependent on the classified sports situation.

7. The method of claim 1, further comprising tracking the locating of a sports projectile within the sports area, which location is used to a) classify sports situations, b) calculate athletic intelligence based on speed of the sports projectile.

8. The method of claim 7, wherein calculating athletic intelligence based on the sports projectile successfully leaving the region of interest.

9. The method of claim 1, further comprising a decision matrix storing values for the athletic intelligence metric for options, for each sports situation.

10. The method of claim 1, wherein said speed used for calculating the athletic intelligence metric is tangential speed.

11. A system for calculating athletic intelligence comprising:

a tracking system for tracking locations of athletes within a sports area;
a computer processor programmed to:

calculate speed and trajectory for each athlete;
classify that a sports situation associated with cognitive influence is occurring based on the locations and trajectories of the athletes within a region of interest; and
calculate an athletic intelligence metric for a given athlete based on their speed and changes in their trajectory during the sports situation.

12. The system of claim 11, wherein the tracking system comprises a video camera and the computer processor is further programmed to identify the athletes and determine their location from video from the video camera.

13. The system of claim 11, wherein the tracking system comprises sensors and transceivers worn by each athlete.

14. The system of claim 11, further comprising a datastore storing each athlete's location for a series of timestamps.

15. The system of claim 11, further comprising a datastore an artificial intelligence model trained on sports situations that are labelled with degree of cognitive influence, which model classifies said sports situation.

FIG. 1

130

FIG. 2

150

```
┌─────────────────────────────────┐
│                                 │
│     ┌─────────────────────┐     │
│     │        356          │     │
│     └─────────────────────┘     │
│                ↕                │
│     ┌─────────────────────┐     │
│     │        354          │     │
│     └─────────────────────┘     │
│                ↕                │
│     ┌─────────────────────┐     │
│     │        352          │     │
│     └─────────────────────┘     │
│                                 │
└─────────────────────────────────┘
```

FIG. 3

120

416

414

412

418

FIG. 4

EP 4 769 337 A1

EP 4 769 337 A1

500

502 Collect sensor data

504 Identify activities within the game and their activity scores

506 Rank identified activities according to cognitive load

508 Identify input features and situations within the game

510 Calculate the performance differential between situations

512 Process cognitive ability score based on the differentials

514 Classify and compare scores

FIG. 5

FIG. 6

700

FIG. 7

FIG. 8

FIG. 9

FIG. 10

FIG. 11

EP 4 769 337 A1

FIG. 12

Europäisches
Patentamt
European
Patent Office
Office européen
des brevets

**EUROPEAN SEARCH REPORT**

**Application Number**

EP 25 22 7794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Radke David ET AL: "Passing and Pressure Metrics in Ice Hockey", , 21 August 2021 (2021-08-21), XP093398013, Retrieved from the Internet: URL:http://google.com | 1-9, 11-15 | INV. G06V20/40 G06V40/20 |
| A | * Figures: 2, 4 ; Abstract ; 1 ; 4 ; 5.3 ; 5.1 ; 6.2 ; Table 2 ; 5.2 2 ; Table 4 ; * | 10 | |
| A | MANAFIFARD M. ET AL: "A survey on player tracking in soccer videos", COMPUTER VISION AND IMAGE UNDERSTANDING ACADEMIC PRESS., US, vol. 159, 4 February 2017 (2017-02-04), pages 19-46, XP085059006, ISSN: 1077-3142, DOI: 10.1016/J.CVIU.2017.02.002 | 1 | |
| A | CHAOYI GU ET AL: "Player Pressure Map - A Novel Representation of Pressure in Soccer for Evaluating Player Performance in Different Game Contexts", ARXIV.ORG CORNELL UNIVERSITY LIBRARY, 201 OLIN LIBRARY CORNELL UNIVERSITY ITHACA, NY 14853, 29 January 2024 (2024-01-29), XP091678550, | 1 | TECHNICAL FIELDS SEARCHED (IPC) G06V |
| A | ANDRIENKO GENNADY ET AL: "Visual analysis of pressure in football", JOURNAL OF DATA MINING AND KNOWLEDGE DISCOVERY NORWELL, MA, US, vol. 31, no. 6, 27 May 2017 (2017-05-27), pages 1793-1839, XP036332440, ISSN: 1384-5810, DOI: 10.1007/S10618-017-0513-2 [retrieved on 2017-05-27] | 1 | |

-/--

The present search report has been drawn up for all claims

| Place of search | Date of completion of the search | Examiner |
|---|---|---|
| The Hague | 19 May 2026 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 25 22 7794

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 628 678 B2 (PERFORMANCE LAB TECH LIMITED [NZ]) 21 April 2020 (2020-04-21) ----- | 1 | |
| A | US 2010/184564 A1 (MOLYNEUX JAMES [US] ET AL) 22 July 2010 (2010-07-22) ----- | 1 | |
| A | US 10 956 723 B2 (PILLAR VISION INC [US]) 23 March 2021 (2021-03-23) ----- | 1 | |

TECHNICAL FIELDS
SEARCHED (IPC)

The present search report has been drawn up for all claims

| Place of search | Date of completion of the search | Examiner |
|---|---|---|
| The Hague | 19 May 2026 | Versluis, Anton |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 22 7794

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2026

| Patent document cited in search report | | Publication date | Patent family member(s) | | Publication date |
|---|---|---|---|---|---|
| US 10628678 | B2 | 21-04-2020 | AU | 2014347365 A1 | 23-06-2016 |
| | | | EP | 3066616 A1 | 14-09-2016 |
| | | | US | 2017032191 A1 | 02-02-2017 |
| | | | US | 2018314895 A1 | 01-11-2018 |
| | | | US | 2019294882 A1 | 26-09-2019 |
| | | | WO | 2015069123 A1 | 14-05-2015 |
| US 2010184564 | A1 | 22-07-2010 | CA | 2743188 A1 | 10-06-2010 |
| | | | CA | 2744209 A1 | 10-06-2010 |
| | | | CA | 2920998 A1 | 10-06-2010 |
| | | | CA | 2921823 A1 | 10-06-2010 |
| | | | CN | 102341149 A | 01-02-2012 |
| | | | CN | 102369046 A | 07-03-2012 |
| | | | CN | 105288963 A | 03-02-2016 |
| | | | EP | 2370186 A2 | 05-10-2011 |
| | | | EP | 2370187 A1 | 05-10-2011 |
| | | | EP | 2724757 A1 | 30-04-2014 |
| | | | ES | 2534509 T3 | 23-04-2015 |
| | | | JP | 5478634 B2 | 23-04-2014 |
| | | | JP | 5662942 B2 | 04-02-2015 |
| | | | JP | 6038854 B2 | 07-12-2016 |
| | | | JP | 2012510873 A | 17-05-2012 |
| | | | JP | 2012510876 A | 17-05-2012 |
| | | | JP | 2015027565 A | 12-02-2015 |
| | | | JP | 2017074382 A | 20-04-2017 |
| | | | US | 2010184563 A1 | 22-07-2010 |
| | | | US | 2010184564 A1 | 22-07-2010 |
| | | | US | 2012191405 A1 | 26-07-2012 |
| | | | US | 2015375044 A1 | 31-12-2015 |
| | | | US | 2015375085 A1 | 31-12-2015 |
| | | | US | 2019118036 A1 | 25-04-2019 |
| | | | US | 2023048020 A1 | 16-02-2023 |
| | | | WO | 2010065836 A2 | 10-06-2010 |
| | | | WO | 2010065886 A1 | 10-06-2010 |
| US 10956723 | B2 | 23-03-2021 | US | 2018322337 A1 | 08-11-2018 |
| | | | US | 2021166010 A1 | 03-06-2021 |
| | | | US | 2024071140 A1 | 29-02-2024 |
| | | | US | 2024420509 A1 | 19-12-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190388728 A1
- US 20160073961 A
- AU 2017203492 A1